# EUROPÄISCHE PATENTSCHRIFT

(11) **EP 2 048 058 B1**
(45) Veröffentlichungstag und Bekanntmachung des Hinweises auf die Patenterteilung: **04.08.2010**
(21) Anmeldenummer: 07020061.3
(22) Anmeldetag: 12.10.2007
(51) Int. Cl.: B62D 1/06

(54) **Beheizbares Lenkrad mit einem mit Polyamid beschichteten Heizleiter**
Heatable steering wheel with a heating element coated in polyamide
Volant chauffant doté d'un conducteur thermique revêtu de polyamide

(43) Veröffentlichungstag der Anmeldung: 15.04.2009
(73) Patentinhaber: Delphi Technologies, Inc., Troy, Michigan 48007 (US)
(72) Erfinder: Pietsch, Karsten, Dr., 13469 Berlin (DE); Marotzke, Thomas, 16562 Bergfelde (DE)
(74) Vertreter: Denton, Michael John

(56) Entgegenhaltungen:
- EP-A- 1 026 066
- GB-A- 752 890
- GB-A- 1 102 859
- US-A- 4 444 709
- US-A- 4 547 655

## Beschreibung

Die vorliegende Erfindung betrifft ein beheizbares Lenkrad, welches einen lenkradförmigen Grundkörper, ein Überzugsmaterial und wenigstens ein zwischen dem Grundkörper und dem Überzugsmaterial angeordnetes Heizelement umfasst.

Elektrisch beheizbare Lenkräder enthalten üblicherweise ein einen Heizdraht umfassendes Heizelement, durch welches die Temperatur des Überzugsmaterials auf eine voreingestellte Temperatur aufgeheizt werden kann. Herkömmlicherweise wird als Heizdraht ein Kupferdrahtnetz eingesetzt, das auf einem Träger aus beispielsweise weichem Schaum, wie Polyurethanschaum, oder Filz fixiert ist. Dieser mit dem Heizdraht versehene Träger ist mit dem Überzugsmaterial des Lenkrads, welches zumeist aus Leder besteht, mittels eines Klebstoffs verbunden, wobei der Heizdraht zwischen dem Träger und dem Überzugsmaterial angeordnet ist.

Bei der Herstellung des Lenkrads wird das mit dem Kupferdrahtnetz versehene Überzugsmaterial um den Träger herum gewunden. Dabei wird das Kupferdrahtnetz naturgemäß einer hohen mechanischen Belastung ausgesetzt, durch welche das Überzugsmaterial beschädigt werden kann. Auch während des Fahrens ist das Kupferdrahtnetz einer gewissen mechanischen Belastung ausgesetzt.

Aus der EP 1 026 066 A2 ist ein Lenkrad bekannt, bei dem die Lenkradumhüllung aus einer Wärme leitenden Tragschicht und einer außenseitig auf der Tragschicht liegenden Schicht aus Furnierholz besteht.

In der GB 752,890 wird ein beheizbares Lenkrad beschrieben, bei dem ein Widerstandsdraht um einen Grundkörper herumgewunden ist, der an punktuellen Stellen mit dem Grundkörper verbunden ist, wobei darüber einer Hülle angeordnet ist.

Aus der GB 1,102,859 ist ein Heizdraht bekannt, welcher mit einem Polymer, wie beispielsweise mit einem aromatischen Polyimid, aromatischen Polyamid oder Polyoxydiazol, beschichtet ist.

In der US 4,444,709 wird ein Verfahren zum kontinuierlichen Herstellen eines Polymerlaminatbandes mit einer Vielzahl von Metalldrähten, welche darin eingebettet sind, offenbart.

Zudem sind elektrisch beheizbare Lenkräder während ihres Betriebs menschlichem Schweiß ausgesetzt, welcher durch das Überzugsmaterial, das beispielsweise aus Leder besteht, bis zu dem Heizdraht aus Kupfer durchdringen kann. Da Schweiß neben Wasser auch Salze, insbesondere Natriumchlorid, Ammoniak, Zucker, Harnstoff und andere Verbindungen enthält, kann dieser die Funktionstüchtigkeit des Heizdrahtes nach längerem Gebrauch beeinträchtigen oder gar zerstören.

Um die Heizdrähte gegen mechanische Belastungen und die Einwirkung von Schweiß zu schützen, werden diese üblicherweise mit Polyurethanbeschichtungen versehen. Dabei werden hohe Anforderungen an die Beschichtung gestellt, da schon kleine Defekte in der Beschichtung während des Betriebs eines elektrisch beheizbaren Lenkrads zu einer funktionsbeeinträchtigenden elektrischen Widerstandserhöhung führen können. Allerdings ist die Beständigkeit herkömmlicher, mit Polyurethan beschichteter Heizdrähte gegenüber mechanischen Beanspruchungen und gegenüber Chemikalien, insbesondere Schweiß, verbesserungsbedürftig.

Aufgabe der vorliegenden Erfindung ist daher die Bereitstellung eines (elektrisch) beheizbaren Lenkrads, bei dem der in dem Lenkrad enthaltene Heizleiter gegenüber mechanischen Belastungen und gegenüber der Einwirkung von Schweiß bestmöglich geschützt ist.

Erfindungsgemäß wird diese Aufgabe gelöst durch ein beheizbares Lenkrad, welches einen lenkradförmigen Grundkörper, ein Überzugsmaterial und wenigstens ein zwischen dem Grundkörper und dem Überzugsmaterial angeordnetes Heizelement umfasst, wobei das Heizelement wenigstens einen mit Polyamid beschichteten Heizleiter enthält.

Diese Lösung basiert auf der überraschenden Erkenntnis, dass ein mit einer Polyamidbeschichtung versehener Heizleiter nicht nur eine hervorragende Widerstandsfähigkeit gegenüber den bei der Herstellung eines beheizbaren Lenkrads und den bei dem Betrieb eines beheizbaren Lenkrads auftretenden mechanischen Belastungen aufweist, sondern sich auch durch eine signifikant bessere Chemikalienbeständigkeit, insbesondere gegenüber Schweiß, auszeichnet als mit herkömmlichen Beschichtungen, wie. Polyurethanbeschichtungen, versehene Heizleiter. Zudem verbessert die Polyamidbeschichtung die mechanische Steifigkeit und die mechanische Flexibilität des Heizleiters.

Um eine schnelle Aufheizung zu ermöglichen, wird in Weiterbildung des Erfindungsgedankens vorgeschlagen, dass der wenigstens eine Heizleiter ein Heizdraht aus Metall oder aus einer Metalllegierung ist. Besonders gute Ergebnisse werden insbesondere erhalten, wenn der wenigstens eine Heizleiter ein Heizdraht aus Kupfer, Messing, einer Chromlegierung, einer Nickellegierung oder einer Chrom-Nickel-Legierung ist, und der Heizdraht in dem Lenkrad in Form eines Heizdrahtnetzes vorgesehen ist.

Gemäß einer weiteren bevorzugten Ausführungsform beträgt die Dicke der Polyamidbeschichtung des Heizleiters zwischen 5 und 1.000 µm. Dadurch wird ein ausreichender Schutz gegenüber den bei der Herstellung und den bei dem Betrieb des beheizbaren Lenkrads auftretenden mechanischen Belastungen sowie eine ausreichende Isolierung gegenüber Schweiß erreicht.

Grundsätzlich kann die Beschichtung des Heizleiters bzw. Heizdrahtes aus jedem bekannten Polyamid bestehen. Beispielsweise kann die Polyamidbeschichtung durch Extrusion auf den Heizleiter bzw. Heizdraht aufgebracht werden.

Beispielsweise kann die Polyamidbeschichtung des Heizleiters aus aliphatischem Polyamid, aus aromatischem Polyamid oder aus teilaromatischem Polyamid bestehen, wobei das Polyamid ein Polyamid-Homopolymer oder ein Polyamid-Copolymer sein kann. Sofern das Polyamid der Beschichtung ein Copolyamid ist, kann dieses ein statistisches Copolymer, ein alternierendes Copolymer, ein Blockcopolymer oder ein Pfropfcopolymer sein.

In Weiterbildung des Erfindungsgedankens vorgeschlagen, dass die Polyamidbeschichtung des Heizleiters einen spezifischen Durchgangswider-stand von wenigstens 10¹² Ω·cm, bevorzugt von wenigstens 10¹³ Ω·cm und besonders bevorzugt von wenigstens 10¹⁴ Ω·cm aufweist. Dadurch wird eine gute Beständigkeit des Heizleiters gegenüber Flüssigkeit erreicht.

Um die mechanische Widerstandfähigkeit und die Chemikalienbeständigkeit zu erhöhen, kann gemäß einer weiteren bevorzugten Ausführungsform der vorliegenden Erfindung zwischen dem Heizleiter und der Polyamidbeschichtung wenigstens eine Zwischenschicht aus einem anderen Material als Polyamid vorgesehen sein. Vorzugsweise ist zwischen dem Heizleiter und der Polyamidbeschichtung eine Zwischenschicht aus Polyurethan vorgesehen. Desweiteren kann der Heizleiter emailliert sein, das heißt zwischen dem Heizleiter und der Polyamidbeschichtung bzw. zwischen dem Heizleiter und der Zwischenschicht, sofern eine solche vorgesehen ist, ist eine Emailschicht vorgesehen. Besonders bevorzugt enthält das erfindungsgemäße beheizbare Lenkrad als Heizelement einen emaillierten Kupferdraht, welcher mit einer Polyurethanzwischenschicht und darauf mit einer Polyamidbeschichtung versehen ist.

Um das Lenkrad beheizen zu können, muss der in dem elektrisch beheizbaren Lenkrad vorgesehene Heizleiter mit einer Stromquelle verbunden sein. Vorzugsweise weist das erfindungsgemäße Lenkrad auch einen Temperatursensor sowie einen Regler auf, um die Temperatur des Überzugsmaterials des Lenkrads exakt einstellen zu können.

In Weiterbildung des Erfindungsgedankens wird vorgeschlagen, zwischen dem wenigstens einem mit Polyamid beschichteten Heizleiter und dem Grundkörper eine Isolierschicht bzw. Trägerschicht vorzusehen, um die mechanische Belastbarkeit des Lenkrads zu erhöhen.

Vorzugsweise besteht die zwischen dem Grundkörper und dem Heizleiter vorgesehene Isolierschicht aus Schaumstoff, Vlies oder Filz. Als Schaumstoff kann beispielsweise Schaumstoff aus Polyurethan eingesetzt werden.

Ein weiterer Gegenstand der vorliegenden Erfindung ist die Verwendung eines Heizelements, das wenigstens einen mit Polyamid beschichteten Heizleiter enthält, in einem beheizbaren Lenkrad.

Nachfolgend wird die vorliegende Erfindung rein beispielhaft anhand vorteilhafter Ausführungsformen und unter Bezugnahme auf die beigefügte Zeichnungen beschrieben.

Dabei zeigen:
- Fig. 1: eine Querschnittsansicht eines erfindungsgemäßen beheizba- ren Lenkrads gemäß einem Ausführungsbeispiel der vorlie- genden Erfindung und
- Fig. 2: eine Querschnittsansicht eines in einem erfindungsgemäßen beheizbaren Lenkrad enthaltenen Heizleiters gemäß einem Ausführungsbeispiel der vorliegenden Erfindung.

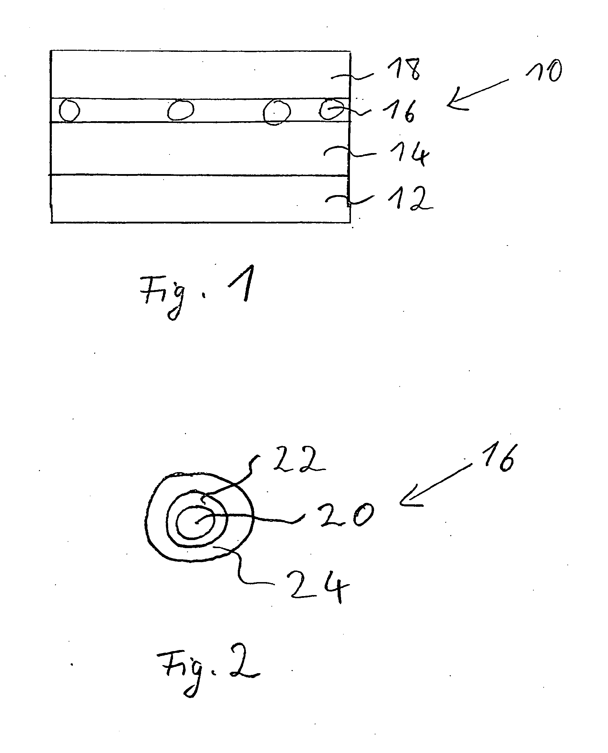

Das in der Figur 1 dargestellte elektrisch beheizbare Lenkrad 10 umfasst einen lenkradförmigen Grundkörper 12, eine darauf aufgebrachte Isolierschicht 14 aus Polyurethan-Schaumstoff, einen darauf angeordneten Heizleiter 16 in Form eines gewundenen Drahtes auf einer Trägerschicht aus Weichschaum oder ähnlichem sowie ein darauf angeordnetes Überzugsmaterial 18 aus Leder.

Wie in der Figur 2 dargestellt, besteht der Heizleiter aus einem Kupferdraht 20, der außenseitig mit einer Zwischenschicht 22 beispielsweise aus Polyurethan versehen ist, auf der eine Polyamidbeschichtung 24 vorgesehen ist.

Im Folgenden wird die vorliegende Erfindung anhand eines beispielhaften, nicht einschränkenden Beispiels näher erläutert.

### Beispiel

Ein emaillierter Kupferdraht wurde mit einer Polyurethanschicht versehen. Anschließend wurde der mit der Polyurethanschicht versehene Kupferdraht durch Extrusion mit Polyamid beschichtet.

Der so hergestellte mit Polyamid beschichtete Kupferdraht wurde mittels Klebstoff mit einem Überzugsmaterial aus Leder verbunden und anschließend um einen Träger aus Polyurethanschaum herum gewunden. Der so hergestellte Aufbau wurde anschließend mit einer Stromquelle, mit einem Temperatursensor und mit einem Regler verbunden und auf einen lenkradförmigen Grundkörper aufgebracht.

Das so hergestellte elektrisch beheizbare Lenkrad wurde nachfolgend für 168 Stunden hinsichtlich seiner Beständigkeit gegenüber Schweiß untersucht. Hierzu wurde das Lenkrad mit einem mit künstlicher Schweißlösung gemäß DIN 54020 getränkten Vlies umwickelt und in einer Klimakammer periodischen Temperaturschwankungen (jeweils 4 Stunden bei 5°C und 4 Stunden bei 60°C) ausgesetzt, während denen das Lenkrad durch den Heizdraht auf eine Temperatur von 23°C beheizt wurde. Alle 24 Stunden wurde das Lenkrad aus der Klimakammer entnommen, für 2 Stunden bei Umgebungstemperatur belassen, bevor der Widerstand des Heizdrahtes und der des NTC bei der Umgebungstemperatur gemessen wurden.

Es zeigte sich, dass der Widerstand des Heizdrahtes über die gesamte Versuchsdauer nahezu konstant geblieben ist. Die Widerstandserhöhung der Messwerte betrug lediglich 0,53 Ohm, d.h. 15 %. Dies zeigt, dass das Lenkrad durch die Aussetzung gegenüber Schweiß in seiner Gebrauchsfähigkeit nicht beeinträchtigt wurde.

Ein parallel dazu durchgeführter Test mit einem Lenkrad, welches anstelle eines mit einer Polyamidbeschichtung versehenen Kupfer-Heizdrahts mit einem mit einer Polyurethanbeschichtung versehenen Kupfer-Heizdraht ausgestattet war, ergab eine Widerstandserhöhung der Messwerte von über 100 %, die einen Ausfall der Lenkradheizung bedeutet.

### Bezugszeichenliste

- 10: beheizbares Lenkrad
- 12: Grundkörper
- 14: Isolierschicht
- 16: Heizleiter
- 18: Überzugsmaterial
- 20: Kupferdraht
- 22: Zwischenschicht
- 24: Polyamidbeschichtung

## Patentansprüche

1. Beheizbares Lenkrad, welches einen lenkradförmigen Grundkörper (12), ein Überzugsmaterial (18) und wenigstens ein zwischen dem Grundkörper (12) und dem Überzugsmaterial (18) angeordnetes Heizelement umfasst,
**dadurch gekennzeichnet, dass**
das Heizelement wenigstens einen mit Polyamid (24) beschichteten Heizleiter (16) enthält.

2. Beheizbares Lenkrad nach Anspruch 1,
**dadurch gekennzeichnet, dass**
der wenigstens eine Heizleiter (16) ein Heizdraht aus Metall oder aus einer Metalllegierung ist.

3. Beheizbares Lenkrad nach Anspruch 2,
**dadurch gekennzeichnet, dass**
der wenigstens eine Heizleiter (16) ein Heizdraht aus Kupfer, Messing, einer Chromlegierung, einer Nickellegierung oder einer Chrom-Nickel-Legierung ist.

4. Beheizbares Lenkrad nach zumindest einem der vorstehenden Ansprüche,
**dadurch gekennzeichnet, dass**
die Polyamidbeschichtung (24) des Heizleiters eine Dicke zwischen 5 und 1.000 µm aufweist.

5. Beheizbares Lenkrad nach zumindest einem der vorstehenden Ansprüche,
**dadurch gekennzeichnet, dass**
die Polyamidbeschichtung (24) des Heizleiters (16) aus aliphatischem Polyamid, aromatischem Polyamid oder teilaromatischem Polyamid besteht.

6. Beheizbares Lenkrad nach zumindest einem der vorstehenden Ansprüche,
**dadurch gekennzeichnet, dass**
die Polyamidbeschichtung (24) des Heizleiters (16) ein Polyamid-Homopolymer oder ein Polyamid-Copolymer ist.

7. Beheizbares Lenkrad nach Anspruch 6,
**dadurch gekennzeichnet, dass**
das Polyamid-Copolymer ein statistisches Copolymer, ein alternierendes Copolymer, ein Blockcopolymer oder ein Pfropfcopolymer ist.

8. Beheizbares Lenkrad nach zumindest einem der vorstehenden Ansprüche,
**dadurch gekennzeichnet, dass**
die Polyamidbeschichtung (24) des Heizleiters (16) einen spezifischen Durchgangswiderstand von wenigstens 10¹² Ω·cm, bevorzugt von wenigstens 10¹³ Ω·cm und besonders bevorzugt von wenigstens 10¹⁴ Ω·cm aufweist.

9. Beheizbares Lenkrad nach zumindest einem der vorstehenden Ansprüche,
**dadurch gekennzeichnet, dass**
zwischen dem Heizleiter (16) und der Polyamidbeschichtung (24) wenigstens eine Zwischenschicht (22) aus einem anderen Material als Polyamid, vorzugsweise aus Polyurethan, vorgesehen ist.

10. Beheizbares Lenkrad nach zumindest einem der vorstehenden Ansprüche,
**dadurch gekennzeichnet, dass**
der wenigstens eine Heizleiter (16) mit einer Stromquelle verbunden ist und das Lenkrad einen Temperatursensor sowie einen Regler enthält.

11. Beheizbares Lenkrad nach zumindest einem der vorstehenden Ansprüche,
**dadurch gekennzeichnet, dass**
das zwischen dem wenigstens einem mit Polyamid (24) beschichteten Heizleiter (16) und dem Grundkörper (12) eine Isolierschicht (14) vorgesehen ist.

12. Beheizbares Lenkrad nach Anspruch 11,
**dadurch gekennzeichnet, dass**
die Isolierschicht (14) aus Schaumstoff, Vlies oder Filz besteht.

13. Beheizbares Lenkrad nach Anspruch 12,
**dadurch gekennzeichnet, dass**
der Schaumstoff aus Polyurethan besteht.

14. Verwendung eines Heizelements, das wenigstens einen mit Polyamid (24) beschichteten Heizleiter (16) enthält, in einem beheizbaren Lenkrad (10).

## Claims

1. Heatable steering wheel having a steering wheel shaped base plate (12), a coating material (18) and at least a heating element arranged between the base plate (12) and the coating material (18),
**characterized in that**
the heating element contains at least a heating conductor (16) coated with polyamide (24).

2. Heatable steering wheel according to claim 1,
**characterized in that**
the at least one heating conductor (16) is a heating wire made of metal or metal alloy.

3. Heatable steering wheel according to claim 2,
**characterized in that**
the at least one heating conductor (16) is a heating wire made of copper, brass, chromium alloy, nickel alloy or chromium-nickel alloy.

4. Heatable steering wheel according to at least one of the preceding claims,
**characterized in that**
the polyamide coating (24) of the heating conductor has a thickness of between 5 and 1000 µm

5. Heatable steering wheel according to at least one of the preceding claims,
**characterized in that**
the polyamide coating (24) of the heating conductor (16) is made of aliphatic polyamide, aromatic polyamide or partly aromatic polyamide.

6. Heatable steering wheel according to at least one of the preceding claims,
**characterized in that**
the polyamide coating (24) of the heating conductor (16) is a polyamide homopolymer or a polyamide copolymer.

7. Heatable steering wheel according to claim 6,
**characterized in that**
the polyamide copolymer is a statistical copolymer, a sequential copolymer, a block copolymer or a graft copolymer.

8. Heatable steering wheel according to at least one of the preceding claims,
**characterized in that**
the polyamide coating (24) of the heating conductor (16) has a volume resistivity of at least 10¹² Ω·cm, preferably at least 10¹³ Ω·cm and in particular preferably of at least 10¹⁴ Ω·cm.

9. Heatable steering wheel according to at least one of the preceding claims,
**characterized in that**
at least an intermediate layer (22) of another material than polyamide, preferably of polyurethane, is provided between the heating conductor (16) and the polyamide coating (24).

10. Heatable steering wheel according to at least one of the preceding claims,
**characterized in that**
the at least one heating conductor (16) is connected with a current source and the steering wheel comprises a temperature sensor and a controller.

11. Heatable steering wheel according to at least one of the preceding claims,
**characterized in that**
an insulating layer (14) is provided between the at least one heating conductor (16) coated with polyamide (24) and the base plate (12).

12. Heatable steering wheel according to claim 11,
**characterized in that**
the insulating layer (14) consists of foam, fleece or felt.

13. Heatable steering wheel according to claim 12,
**characterized in that**
the foam consists of polyurethane.

14. Use of a heating element, which contains at least one heating conductor (16) coated with polyamide (24), in a heatable steering wheel.

## Revendications

1. Volant chauffé, qui comprend un corps de base (12) en forme de volant, un matériau de revêtement (18) et au moins un élément chauffant agencé entre le corps de base (12) et le matériau de revêtement (18),
**caractérisé en ce que**
l'élément chauffant contient au moins un conducteur chauffant (16) revêtu de polyamide (24).

2. Volant chauffé selon la revendication 1,
**caractérisé en ce que**
ledit au moins un conducteur chauffant (16) est un fil chauffant en métal ou en alliage de métal.

3. Volant chauffé selon la revendication 2,
**caractérisé en ce que**
ledit au moins un conducteur chauffant (16) est un fil chauffant en cuivre, laiton, alliage de chrome, alliage de nickel ou alliage chrome-nickel.

4. Volant chauffé selon l'une au moins des revendications précédentes,
**caractérisé en ce que**
le revêtement de polyamide (24) du conducteur chauffant présente une épaisseur entre 5 et 1000 µm.

5. Volant chauffé selon l'une au moins des revendications précédentes,
**caractérisé en ce que**
le revêtement de polyamide (24) du conducteur chauffant (16) est en polyamide aliphatique, en polyamide aromatique, ou en polyamide partiellement aromatique.

6. Volant chauffé selon l'une au moins des revendications précédentes,
**caractérisé en ce que** le revêtement de polyamide (24) du conducteur chauffant (16) est un homopolymère de polyamide ou un copolymère de polyamide.

7. Volant chauffé selon la revendication 6,
**caractérisé en ce que**
le copolymère de polyamide est un copolymère statistique, un copolymère alternant, un copolymère-bloc ou un copolymère greffé.

8. Volant chauffé selon l'une au moins des revendications précédentes,
**caractérisé en ce que**
le revêtement de polyamide (24) du conducteur chauffant (16) présente une résistance de passage spécifique d'au moins 10¹² Ω·cm, de préférence d'au moins 10¹³ Ω·cm et de façon particulièrement préférée d'au moins 10¹⁴ Ω·cm.

9. Volant chauffé selon l'une au moins des revendications précédentes,
**caractérisé en ce**
**qu'**il est prévu au moins une couche intermédiaire (22) en un autre matériau que du polyamide, de préférence en polyuréthane, entre le conducteur chauffant (16) et le revêtement de polyamide (24).

10. Volant chauffé selon l'une au moins des revendications précédentes,
**caractérisé en ce que**
ledit au moins un conducteur chauffant (16) est relié à une source de courant et le volant contient un capteur de température ainsi qu'un régulateur.

11. Volant chauffé selon l'une au moins des revendications précédentes,
**caractérisé en ce**
**qu'**une couche isolante (14) est prévue entre ledit au moins un conducteur chauffant (16) revêtu de polyamide (24) et le corps de base (12).

12. Volant chauffé selon la revendication 11,
**caractérisé en ce que**
la couche isolante (14) est en mousse, en non-tissé ou en feutre.

13. Volant chauffé selon la revendication 12,
**caractérisé en ce que** la mousse est en polyuréthane.

14. Utilisation d'un élément chauffant, qui contient au moins un conducteur chauffant (16) revêtu de polyamide (24), dans un volant chauffé (10).
